# FASCICULE DE BREVET EUROPEEN

(11) **EP 1 676 279 B1**
(45) Date de publication et mention de la délivrance du brevet: **14.10.2009**
(21) Numéro de dépôt: 04805264.1
(22) Date de dépôt: 21.10.2004
(51) Int. Cl.: G21C 1/09

(54) **PROCEDE ET DISPOSITIF D EVENTAGE DU CIRCUIT PRIMAIRE D' UN REACTEUR NUCLEAIRE**
VERFAHREN UND EINRICHTUNG ZUM ABLÜFTEN DES PRIMÄRKREISLAUFS EINES KERNREAKTORS
METHOD AND DEVICE FOR VENTING THE PRIMARY CIRCUIT OF A NUCLEAR REACTOR

(30) Priorité: 23.10.2003 FR 0312421
(43) Date de publication de la demande: 05.07.2006
(73) Titulaire: Areva NP, 92400 Courbevoie (FR)
(72) Inventeur: GILBERT, René, F-69570 Dardilly (FR)
(74) Mandataire: Domenego, Bertrand
(86) Numéro de dépôt international: PCT/FR2004/002700
(87) Numéro de publication internationale: WO 2005/040434

(56) Documents cités:
- WO-A-93/09542
- WO-A-96/01476
- US-A- 4 567 016

## Description

L'invention concerne un procédé et un dispositif d'éventage du circuit primaire d'un réacteur nucléaire refroidi par de l'eau sous pression.

Les réacteurs nucléaires à eau sous pression comportent un circuit primaire dans lequel circule de l'eau de refroidissement du coeur du réacteur nucléaire qui est disposé à l'intérieur de la cuve du réacteur. L'eau de refroidissement sous haute pression et à haute température est utilisée pour transférer la chaleur prélevée dans le coeur du réacteur nucléaire à de l'eau d'alimentation dont on assure l'échauffement et la vaporisation à l'intérieur de générateurs de vapeur. Le circuit primaire du réacteur nucléaire comporte la cuve du réacteur nucléaire qui est remplie d'eau sous pression pendant le fonctionnement du réacteur nucléaire et au moins deux boucles et généralement trois ou quatre boucles sur chacune desquelles sont disposés un générateur de vapeur et une pompe primaire assurant la circulation de l'eau primaire entre la cuve du réacteur et le générateur de vapeur. Chacune des boucles du circuit primaire comporte des canalisations primaires de grand diamètre, une première canalisation reliant une partie primaire du générateur de vapeur à la cuve, une seconde canalisation reliant une partie de refoulement de la pompe primaire à la cuve et une troisième canalisation reliant la partie primaire du générateur de vapeur à une partie d'aspiration de la pompe primaire. Par l'intermédiaire de la première canalisation, appelée branche chaude, l'eau de refroidissement échauffée venant de la cuve parvient dans un compartiment d'entrée de la partie primaire du générateur de vapeur et, par l'intermédiaire de la seconde canalisation, appelée branche froide, l'eau de refroidissement ayant circulé dans la partie primaire du générateur de vapeur est renvoyée dans la cuve depuis un compartiment de sortie de la partie primaire du générateur de vapeur, en passant par une troisième canalisation appelée branche intermédiaire qui relie la partie primaire du générateur de vapeur à une partie de l'aspiration de la pompe primaire.

La partie primaire du générateur de vapeur comporte un faisceau de tubes ayant deux branches sensiblement verticales de grande hauteur qui sont reliées au compartiment d'entrée et au compartiment de sortie de la partie primaire du générateur de vapeur. Les tubes du faisceau, généralement en forme d'U, comportent une partie supérieure (appelée cintre dans le cas de tubes en U) qui constitue l'un des points hauts du circuit primaire du réacteur nucléaire.

La cuve du réacteur nucléaire qui est de forme globalement cylindrique et qui présente un axe vertical comporte une ouverture d'accès à son extrémité supérieure qui est fermée par un couvercle généralement bombé, pendant le fonctionnement du réacteur nucléaire. La partie supérieure de la cuve sous le couvercle constitue un second point haut du circuit primaire.

Le circuit primaire d'un réacteur nucléaire à eau sous pression comporte également un pressuriseur qui est relié par une ligne d'expansion à la branche chaude de l'une des boucles du circuit primaire pour assurer le maintien en pression et température de l'eau primaire. Le pressuriseur comporte une enveloppe de forme générale cylindrique à axe vertical de grande hauteur dans une partie inférieure de laquelle débouchent des moyens de chauffage électriques de l'eau primaire contenue dans le pressuriseur et, dans sa partie supérieure, une ligne d'aspersion d'eau primaire et une ligne de décharge comportant les soupapes de protection

La partie supérieure du pressuriseur comportant la ligne d'aspersion constitue le point le plus haut du circuit primaire du réacteur nucléaire. La partie supérieure du couvercle de la cuve est reliée à une conduite d'éventage pour l'évacuation de gaz du circuit primaire présents sous le couvercle de la cuve. La partie supérieure de la cuve qui constitue un point haut du circuit primaire est à un niveau sensiblement inférieur au niveau de la partie supérieure du pressuriseur. Les parties supérieures des tubes des faisceaux des générateurs de vapeur sont à un niveau intermédiaire entre le niveau supérieur du pressuriseur et le niveau supérieur de la cuve.

Lorsqu'on effectue le remplissage en eau du circuit primaire du réacteur nucléaire, par exemple pour le démarrage initial du réacteur nucléaire ou pour un redémarrage après un arrêt dans lequel on a effectué une vidange du circuit primaire, il est nécessaire d'évacuer complètement les gaz présents dans le circuit primaire, avant de redémarrer le réacteur nucléaire. En effet, si des gaz sont présents dans le circuit primaire et sont entraînés par l'eau de refroidissement pendant le fonctionnement du réacteur nucléaire, les échanges de chaleur entre l'eau de refroidissement et les éléments combustibles du coeur, d'une part, et les tubes des générateurs de vapeur, d'autre part, deviennent beaucoup moins efficaces, ce qui se traduit par un fonctionnement détérioré quant au rendement thermique et à la sécurité liée à l'efficacité du refroidissement du coeur. En outre, les écoulements d'eau de refroidissement dans le circuit primaire risquent de devenir instables, lorsque l'eau de refroidissement primaire renferme des gaz au moment du redémarrage du réacteur nucléaire et l'oxygène contenu dans les gaz peut entraîner à haute température des corrosions du circuit primaire.

Un remplissage complet du circuit primaire par de l'eau de refroidissement, sans présence de gaz résiduel, est une opération difficile, dans la mesure où le circuit primaire comporte des points hauts tels que mentionnés plus haut. En particulier, des gaz présents dans la partie supérieure des tubes des faisceaux des générateurs de vapeur peuvent être difficiles à évacuer, lors du remplissage du circuit primaire.

L'éventage complet du circuit primaire, c'est-à-dire l'évacuation de tous les gaz présents dans le circuit primaire, lors du remplissage du circuit primaire, nécessite d'effectuer des opérations longues et complexes qui allongent les durées nécessaires pour remettre le réacteur en fonctionnement après une période d'arrêt. En outre, ces opérations complexes présentent des risques qui ne peuvent être maîtrisés qu'en adoptant des procédures extrêmement rigoureuses qui obligent l'installation à subir des transitoires.

On a proposé jusqu'ici deux procédés d'éventage du circuit primaire d'un réacteur nucléaire qui seront décrits ci-dessous dans le cas d'un réacteur comportant un circuit primaire à trois boucles.

Un premier procédé consiste à remplir l'ensemble du circuit avec de l'eau de refroidissement puis à réaliser l'éventage, par les lignes d'éventage aux points hauts constitués par la partie supérieure du pressuriseur et par le couvercle de la cuve. Après avoir réalisé ce premier éventage sommaire qui ne permet pas en particulier d'évacuer les gaz contenus dans la partie supérieure des faisceaux des générateurs de vapeur, on augmente la pression dans le circuit primaire jusqu'à un niveau permettant de démarrer les pompes primaires, ce niveau étant généralement de 25 bars. On démarre alors une pompe primaire pendant un court instant. L'air bloqué dans les parties supérieures des tubes des faisceaux des générateurs de vapeur est chassé sous le couvercle de la cuve. On ramène alors la pression à 3 bars pour que des opérateurs puissent réaliser l'éventage sur les lignes d'éventage du pressuriseur et de la cuve en toute sécurité à basse pression.

Ce cycle complet comportant une mise en pression à 25 bars du circuit primaire par injection d'eau dans le circuit, le démarrage d'une pompe primaire le retour à la pression de 3 bars du circuit primaire par prélèvement d'eau dans le circuit primaire et l'éventage aux points hauts doit être réalisé successivement pour chacune des pompes primaires des trois boucles du circuit primaire, puis en mettant en service simultanément les trois pompes primaires des trois boucles. Lorsqu'on abaisse la pression de 25 bars à 3 bars par prélèvement d'eau dans le circuit primaire, il est nécessaire d'attendre avant de réaliser l'éventage, pour que l'émulsion constituée par l'eau primaire et de l'air se rompe et libère l'air et le gaz qui doivent être éliminé par éventage.

Les volumes d'eau à injecter dans le circuit primaire pour augmenter la pression de 3 à 25 bars ou à soutirer pour faire passer la pression de 25 à 3 bars dépendent du volume d'air résiduel dans le circuit primaire mais, dans tous les cas, la répétition de nombreux cycles dans lesquels on fait varier la pression entre 25 et 3 bars se traduit par la mise en oeuvre de volumes d'eau importants. L'eau soutirée pour faire baisser la pression doit être considérée comme un effluent sur lequel on doit réaliser un traitement particulier avant rejet ou réutilisation. La méthode connue et généralement utilisée pour réaliser l'éventage du circuit primaire est longue et coûteuse.

On a donc proposé une seconde méthode pour réaliser l'éventage du circuit primaire qui vise à éliminer la nécessité de nombreux cycles de pression. Selon cette méthode, on fixe le niveau d'eau dans les tuyauteries des boucles du circuit primaire, lors du remplissage, suivant le plan médian des tuyauteries primaires et l'on raccorde une pompe d'aspiration à vide à la conduite d'éventage du pressuriseur. Après avoir réalisé un niveau de vide suffisant dans le circuit primaire, on remplit totalement le circuit par de l'eau. On établit une pression de l'ordre de 25 bars dans le circuit primaire et l'on met en fonctionnement simultanément les trois pompes primaires pendant une courte durée. On abaisse la pression dans le circuit primaire jusqu'à trois bars puis on réalise un éventage final à la partie supérieure de la cuve et du pressuriseur.

Ce procédé a l'avantage d'être plus court et plus facile à mettre en oeuvre que le procédé habituel décrit précédemment mais il présente des inconvénients et des risques qui en limitent considérablement les possibilités d'utilisation. En effet, pendant la mise sous vide, le système de réfrigération à l'arrêt du réacteur nucléaire (système RRA) doit fonctionner avec un niveau d'eau primaire suivant le plan médian des canalisations des boucles du circuit primaire. Cette configuration comporte des risques potentiels, si bien que certaines autorités de sûreté refusent cette procédure. En outre, la mise sous vide du circuit primaire peut entraîner des fonctionnements ultérieurs défectueux de capteurs du circuit primaire tels que les capteurs de niveau du pressuriseur.

Le but de l'invention est donc de proposer un procédé d'éventage du circuit primaire d'un réacteur nucléaire refroidi par de l'eau sous pression pour réaliser rapidement le remplissage complet en eau du circuit primaire qui comporte une cuve renfermant le coeur du réacteur de forme globalement cylindrique ayant un axe vertical et une extrémité supérieure fermée par un couvercle et au moins deux boucles comportant chacune une première et une seconde canalisations primaires en communication avec la partie interne de la cuve, un générateur de vapeur ayant une partie primaire reliée à la cuve par la première canalisation, comportant un faisceau de tubes ayant des branches sensiblement verticales et une pompe primaire ayant une partie de refoulement reliée à la cuve par la seconde canalisation primaire et une partie d'aspiration reliée à la partie primaire du générateur de vapeur par une troisième canalisation primaire, ainsi qu'un pressuriseur relié à la première canalisation primaire de l'une seulement des boucles du circuit primaire par une conduite de pressurisation, les points les plus hauts du circuit primaire étant constitués dans un ordre de niveau décroissant, par la partie supérieure du pressuriseur comportant une première conduite d'évacuation de gaz, par la partie supérieure des branches des faisceaux de tubes des générateurs de vapeur et par la partie supérieure de la cuve fermée par un couvercle, ayant un second conduit d'évacuation de gaz, ce procédé pouvant être mis en oeuvre dans de très bonnes conditions de sûreté par des opérations plus simples et moins nombreuses que les procédés suivant l'art antérieur.

Dans ce but :
- on remplit le circuit primaire d'eau et on établit la pression de l'eau dans le circuit primaire à un niveau permettant le fonctionnement des pompes primaires,
- on met en fonctionnement une première pompe primaire d'une première boucle non reliée au pressuriseur par une conduite de pressurisation,
- on évacue en continu des gaz contenus dans le circuit primaire et entraînés par l'eau mise en circulation par la pompe à la partie supérieure de la cuve, au moins pendant le fonctionnement de la première pompe primaire,
- on arrête la première pompe primaire,
- on met en fonctionnement successivement chacune des pompes primaires des boucles du circuit primaire, puis simultanément l'ensemble des pompes primaires du circuit primaire, en réalisant simultanément l'évacuation des gaz à la partie supérieure de la cuve, et
- on effectue l'éventage final du circuit primaire aux points hauts du pressuriseur et de la cuve, par l'intermédiaire de la première et de la seconde conduites d'évacuation, après arrêt des pompes primaires et retour à une basse pression inférieure à la pression permettant le fonctionnement des pompes.

Afin de bien faire comprendre l'invention, on va maintenant décrire, à titre d'exemple en se référant aux figures jointes en annexe, la mise en oeuvre du procédé de l'invention dans le cas d'un réacteur nucléaire à trois boucles.

La figure 1 est une vue en élévation et en coupe schématique d'une boucle du circuit primaire d'un réacteur nucléaire à eau sous pression.

La figure 2 est une vue schématique du circuit primaire d'un réacteur nucléaire à trois boucles comportant des moyens pour la mise en oeuvre du procédé d'éventage suivant l'invention.

La figure 3 est une vue en élévation et en coupe partielle d'une boucle d'un réacteur nucléaire comportant des moyens pour la mise en oeuvre du procédé selon l'invention et selon une première variante de réalisation.

La figure 4 est une vue en coupe et en élévation d'une boucle du circuit primaire d'un réacteur nucléaire comportant des moyens pour la mise en oeuvre du procédé suivant l'invention et suivant une seconde variante de réalisation.

La figure 5 est une vue en élévation et en coupe partielle d'une boucle du circuit primaire du réacteur nucléaire comportant des moyens pour la mise en oeuvre du procédé suivant l'invention et suivant une troisième variante.

La figure 6 est une vue en élévation et en coupe partielle d'une boucle du circuit primaire d'un réacteur nucléaire avec la ligne de pressurisation du pressuriseur, comportant des moyens pour la mise en oeuvre du procédé suivant l'invention et suivant une quatrième variante

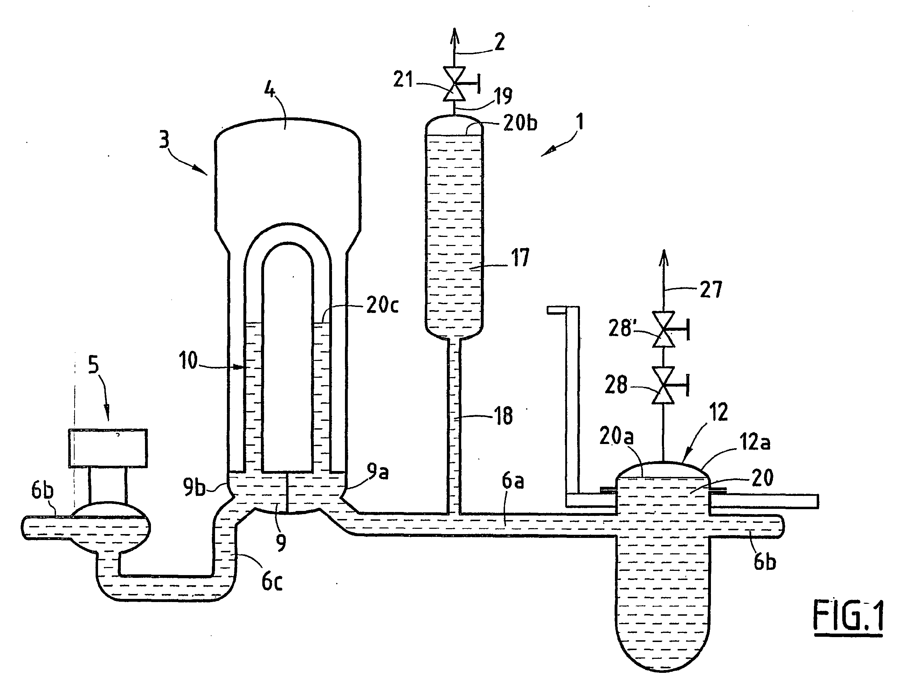

Sur la figure 1, on a représenté une boucle d'un circuit primaire d'un réacteur nucléaire à eau sous pression désignée de manière générale par le repère 1.

Le circuit primaire, destiné à recevoir l'eau sous pression de refroidissement du réacteur nucléaire comporte en particulier une cuve 12 et plusieurs boucles 3 comportant chacune un générateur de vapeur 4 et une pompe primaire 5 destinée à assurer la circulation de l'eau de refroidissement primaire sous pression à l'intérieur de la boucle du circuit primaire.

Sur la figure 1, on a représenté de l'eau 20 remplissant une partie de la cuve 12 et de la boucle 3 du circuit primaire, pendant une phase de remplissage, après une vidange du circuit primaire 1 et avant un redémarrage du réacteur nucléaire.

La boucle 3 du circuit primaire qui a été représentée comporte une première canalisation primaire 6a, appelée branche chaude, joignant la cuve 12 à un compartiment d'entrée de la partie primaire du générateur de vapeur 4, une seconde canalisation primaire 6b, ou branche froide, joignant une partie de refoulement de la pompe primaire 5 à la cuve 12 et une troisième canalisation 6c joignant un compartiment de sortie de la partie primaire du générateur de vapeur 4 à une partie d'aspiration de la pompe primaire 5.

Le pressuriseur 17 du circuit primaire 1 est relié, par l'intermédiaire d'une conduite d'expansion 18 de grand diamètre, à la première canalisation primaire 6a ou branche chaude.

La partie primaire du générateur de vapeur 4 comporte une boîte à eau 9 séparée par une cloison en un compartiment d'entrée 9a et en un compartiment de sortie 9b de l'eau de refroidissement du réacteur nucléaire et un faisceau de tubes 10 communiquant chacun à l'une de ses extrémités avec le compartiment d'entrée et à son autre extrémité avec le compartiment de sortie de la boîte à eau 9. Le faisceau de tubes 10 a été représenté de manière conventionnelle sous la forme d'un seul tube de grand diamètre mais, en réalité, le faisceau de tubes du générateur de vapeur comporte un très grand nombre de tubes de grande longueur et de petit diamètre (par exemple de 3000 à 5000 tubes), chacun des tubes étant plié en U et comportant deux branches droites de très grande longueur disposées verticalement et reliées à leurs extrémités inférieures, respectivement, au compartiment d'entrée et au compartiment de sortie de la boîte à eau 9 du générateur de vapeur.

Les parties cintrées des tubes en U du générateur de vapeur juxtaposées constituent la partie supérieure du faisceau du générateur de vapeur.

La cuve 12 du réacteur nucléaire de forme globale cylindrique à axe vertical comporte une partie supérieure donnant accès à l'intérieur de la cuve qui est fermée par un couvercle 12a pendant les opérations de remplissage, d'éventage, de démarrage et pendant le fonctionnement du réacteur nucléaire.

L'eau 20 introduite dans le circuit primaire 1 remplit la cuve du réacteur nucléaire jusqu'à un niveau supérieur 20a en dessous du couvercle 12a de la cuve, le pressuriseur 17 jusqu'à un niveau supérieur 20b à la partie supérieure du pressuriseur et la partie primaire du générateur de vapeur jusqu'à un niveau 20c de l'eau à la partie supérieure des tubes du faisceau 10.

Des gaz constitués principalement d'air remplissent la partie supérieure de la cuve au-dessus du niveau d'eau 20a, en dessous du couvercle 12a, la partie supérieure du pressuriseur au-dessus du niveau d'eau 20b et la partie supérieure du faisceau 10 du générateur de vapeur, au-dessus du niveau de remplissage 20c.

L'éventage du circuit primaire avant son remplissage complet en eau pour le redémarrage du réacteur nucléaire consiste à évacuer les gaz contenus dans les parties hautes du circuit primaire et en particulier dans les parties supérieures de la cuve, du pressuriseur et du faisceau des générateurs de vapeur, pour assurer un remplissage complet en eau du circuit primaire 1.

La cuve 12 comporte une ligne d'éventage 27 reliée à la partie supérieure du couvercle de cuve 12a sur laquelle sont disposées des vannes pouvant être commandées à distance 28 et 28' permettant l'évacuation de l'air accumulé sous le couvercle 12a de la cuve, lorsqu'elles sont ouvertes.

Le pressuriseur 17 comporte une ligne d'éventage 2 reliée à sa partie supérieure sur laquelle est disposée une vanne 21. La ligne d'éventage peut être constituée par la ligne d'aspersion du pressuriseur reliée sur laquelle est disposée la ligne d'éventage 14.

De manière générale, l'éventage du circuit primaire du réacteur nucléaire est réalisé en ouvrant les vannes des lignes d'éventage du pressuriseur et de la cuve, une première fois après le remplissage en eau du générateur de vapeur, puis après avoir mis en service successivement les pompes primaires des boucles du circuit primaire du réacteur, de manière à assurer l'entraînement de l'air et des gaz piégés dans les parties hautes du circuit primaire et en particulier dans la partie haute des faisceaux 10 des générateurs de vapeur 4.

Comme indiqué plus haut, dans le cadre d'un procédé d'éventage utilisé habituellement, on doit effectuer de nombreux cycles au cours desquels la pression dans le circuit primaire passe d'une pression supérieure de mise en fonctionnement des pompes (par exemple 25 bars) à une pression inférieure (par exemple 3 bars) permettant d'effectuer l'évacuation des gaz sans risque ou inversement de la pression inférieure à la pression supérieure.

On doit effectuer en particulier une mise en pression du circuit primaire à 25 bars avant chaque démarrage d'une pompe et l'abaissement de la pression jusqu'à 3 bars avant d'effectuer l'évacuation des gaz accumulés dans les parties hautes du circuit primaire du réacteur nucléaire.

En outre, avant de réaliser l'évacuation des gaz, on doit attendre la séparation de l'émulsion d'eau et de gaz qui s'accumulent ainsi dans les parties hautes de la cuve et du pressuriseur comportant des moyens d'éventage.

Ces différents cycles doivent être répétés lors de la mise en service de chacune des pompes primaires séparément et lors de la mise en service simultanée des trois pompes situées sur les trois boucles du circuit primaire.

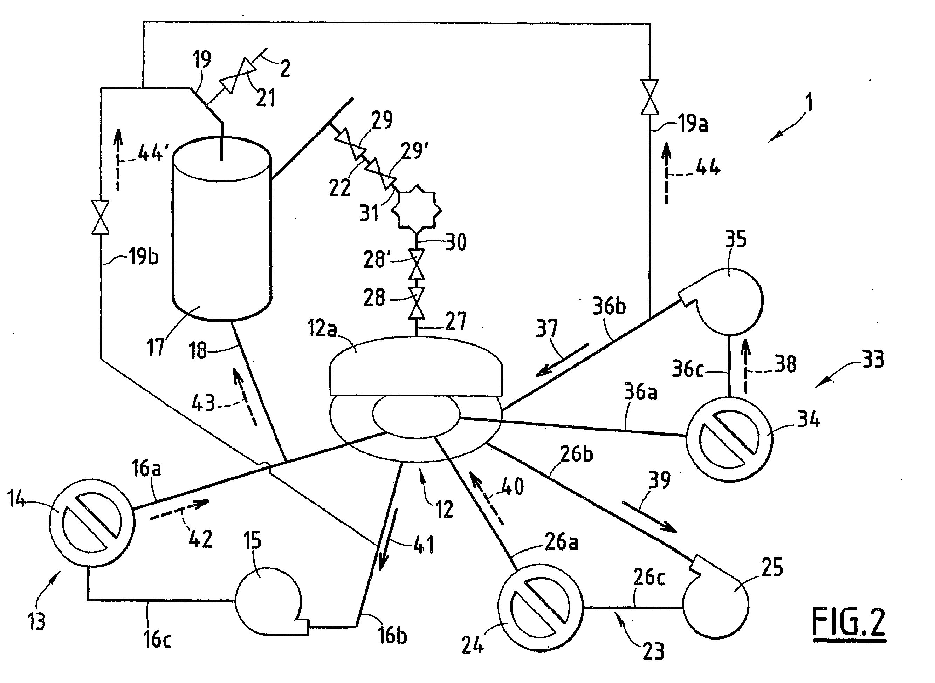

Sur la figure 2, on a représenté de manière conventionnelle, un circuit primaire 1 d'un réacteur nucléaire à trois boucles comportant des moyens supplémentaires pour la mise en oeuvre d'un procédé d'éventage suivant l'invention.

Le circuit primaire 1 comporte une cuve 12 ayant un couvercle 12a fermant sa partie supérieure et trois boucles 13, 23 et 33 sur chacune desquelles est disposé un générateur de vapeur et une pompe primaire. La boucle 13, ou première boucle comporte un générateur de vapeur 14 et une pompe 15. La seconde boucle 23 comporte un générateur de vapeur 24 et une pompe primaire 25. Enfin, la troisième boucle 33 comporte un générateur de vapeur 34 et une pompe primaire 35. Chacune des boucles 13, 23 et 33 du circuit primaire 1 comporte une première canalisation primaire ou branche chaude joignant la cuve 12 à la partie primaire du générateur de vapeur de la boucle, une seconde canalisation primaire ou branche froide joignant une partie de refoulement de la pompe 15 à la cuve 12 et une branche intermédiaire joignant la partie primaire du générateur de vapeur à la pompe primaire de la boucle.

On désigne respectivement par 16a, 26a et 36a les branches chaudes, par 16b, 26b et 36b les branches froides et par 16c, 26c et 36c les branches intermédiaires des boucles respectives 13, 23 et 33.

Le pressuriseur 17 du circuit primaire 1 est relié par une conduite d'expansion 18 de grand diamètre à la branche chaude 16a de la première boucle 13 du circuit primaire

Deux branches froides des boucles du circuit primaire (par exemple les boucles 13 et 33) sont reliées par les conduites 19a et 19b à une ligne d'aspersion 19 débouchant dans la partie supérieure du pressuriseur. En dérivation sur la ligne d'aspersion 19 est disposée une ligne d'éventage 2 comportant une vanne commandée 21.

A la partie supérieure du pressuriseur 17, est également reliée une ligne de décharge 22 sur laquelle sont placées des vannes commandées 29 et 29'.

A la partie supérieure de la cuve 12 est fixée une ligne d'éventage 27 débouchant sous le couvercle 12a, comportant des vannes d'éventage 28 et 28'.

Comme il sera expliqué par la suite, le procédé de l'invention peut être mis en oeuvre en connectant des moyens d'évacuation et/ou de récupération de fluide à l'extrémité 30 de la ligne 27 d'éventage de la cuve 12.

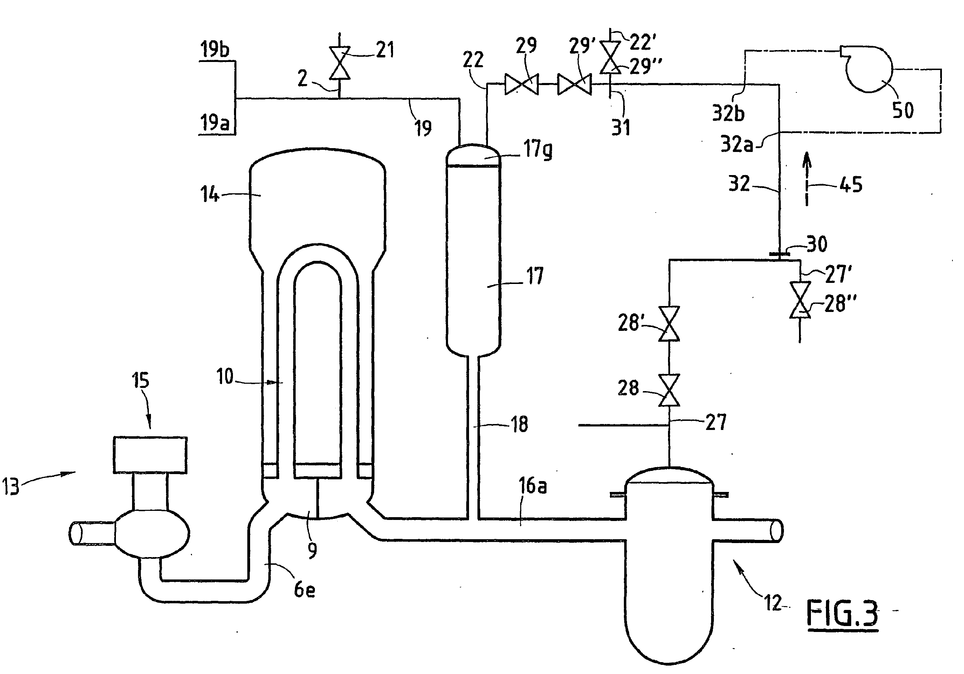

Selon une première forme de réalisation représentée sur la figure 3, les moyens d'évacuation de fluide reliés à l'extrémité 30 de la ligne d'éventage 27 de la cuve sont constitués par une simple tuyauterie 32 permettant de relier l'extrémité 30 de la conduite d'éventage 27 de la cuve, à l'extrémité 31 de la ligne de décharge 22 du pressuriseur 17. Cette ligne 32 comprend aussi deux lignes de vidange 22' et 27' et deux vannes d'isolement 28" et 29"

Sur la figure 3, on a représenté la première boucle 13 du circuit primaire sur laquelle le pressuriseur 17 est relié par la ligne d'expansion 18 à la branche chaude 16a.

On se reportera aux figures 2 et 3 pour décrire la mise en oeuvre du procédé d'éventage suivant l'invention, suivant une première forme de réalisation.

Dans un premier temps, on réalise le remplissage en eau du circuit primaire et l'on élève la pression de l'eau dans le circuit primaire jusqu'à un niveau permettant de mettre en fonctionnement les pompes primaires disposées sur les boucles 13, 23 et 33. Ce niveau de pression est généralement d'à peu près 25 bars.

Les vannes 28 et 28' de la ligne d'éventage 27 de la cuve sont ouvertes ainsi que les vannes 29 et 29' des lignes d'isolement reliées à la partie supérieure du pressuriseur 17.

On met en fonctionnement une première pompe primaire de l'une des boucles 23 et 33, c'est-à-dire des deux boucles dont les branches chaudes 26a et 36a ne sont pas reliées au pressuriseur par une ligne d'expansion. A titre d'exemple, on met en fonctionnement dans un premier temps la pompe 35 de la boucle 33 de manière à faire circuler l'eau contenue dans le circuit primaire et l'air contenu dans les parties hautes du circuit primaire.

Dans la boucle 33 dont la pompe primaire 35 est mise en fonctionnement, la pompe 35 refoule l'eau contenue dans la boucle 33 vers la cuve, par la branche chaude 36b (flèche 37 en traits pleins représentant une circulation d'eau). Simultanément, de l'eau renfermant de l'air contenu dans les parties hautes du faisceau est aspiré par la pompe 35 en provenance du générateur de vapeur 34 (flèche 38 en traits interrompus représentant une circulation d'air ou d'émulsion eau-air).

Dans les boucles 23 et 13 dans lesquelles les pompes primaires ne sont pas en fonctionnement, la circulation des fluides se fait dans le sens inverse de la circulation normale lorsque la pompe primaire est en fonctionnement.

De l'eau provenant de la cuve est mise en circulation dans les branches froides 26b et 16b des boucles 23 et 13 dans le sens allant de la cuve vers la pompe primaire, comme représenté par les flèches en traits pleins 39 et 41. L'eau provenant de la cuve parvient aux générateurs de vapeur 24 et 14 des boucles 23 et 13, par l'intermédiaire des branches froides correspondantes 26b et 16b, des pompes primaires 25 et 15 et des conduites intermédiaires 26c et 16c. L'eau parvenant dans les générateurs de vapeur entraîne l'air contenu dans les parties hautes des faisceaux des générateurs de vapeur 24 et 14, si bien qu'un fluide renfermant de l'air en émulsion est dirigé vers la cuve, comme représenté par les flèches en traits interrompus 40 et 42. De l'air parvient sous le couvercle 12a de la cuve et du fait de l'ouverture des vannes 28 et 28' de la conduite d'éventage 27 et des vannes 29 et 29' de la conduite de décharge 22 reliée au pressuriseur, l'air parvenant sous le couvercle 12a à la partie supérieure de la cuve 12 pénètre dans la partie supérieure du pressuriseur 17 pour s'accumuler en partie haute du pressuriseur 17g.

La liaison par la conduite 32 entre l'extrémité 30 de la ligne d'éventage 27 de la cuve et l'extrémité 31 de la ligne de décharge du pressuriseur permet d'évacuer en continu l'air parvenant à la partie supérieure de la cuve sous le couvercle, par la ligne de décharge du pressuriseur 17.

Comme représenté par les flèches en traits interrompus 43, 44, de l'air ou une émulsion d'eau et d'air est également transmis au pressuriseur 17 par la conduite d'expansion 18, à partir de la branche chaude 16a de la boucle 13 et par les conduites d'aspersion des branches froides 19a et 19b du circuit primaire à la ligne d'aspersion 19 du pressuriseur 17. L'air de la première boucle 13 est évacué principalement vers le pressuriseur 17 par la conduite d'expansion 18 de grand diamètre.

Le procédé de l'invention permet donc d'évacuer en continu, pendant le fonctionnement de la pompe primaire 33, l'air contenu dans les parties hautes des boucles du circuit primaire.

Il n'y a donc pas d'accumulation d'air sous le couvercle de la cuve et de réentraînement d'air par l'eau en circulation dans la cuve.

Après avoir fait fonctionner la pompe primaire jusqu'à obtenir une intensité stabilisée de son moteur d'entraînement, on arrête la pompe primaire 35 et l'on met en fonctionnement la pompe primaire 25 de la seconde boucle du circuit primaire dont la branche chaude n'est pas reliée au pressuriseur par une conduite d'expansion.

Il se produit une circulation dans le sens normal dans la seconde boucle 23 dont la pompe primaire 25 est en fonctionnement et une circulation inverse, comme il a été décrit plus haut dans les boucles 33 et 13.

De ce fait, l'air contenu dans les boucles du circuit primaire est entraîné vers la cuve et est évacué en continu par la ligne 27 dont les vannes 28 et 28' sont ouvertes.

L'air contenu dans la première boucle 13 est entraîné de préférence vers le pressuriseur 17, par l'intermédiaire de la conduite d'expansion de grand diamètre 18. Cet air parvient à la partie supérieure du pressuriseur 17g par la ligne de décharge 22 et la ligne d'aspersion 19. On limite ainsi les quantités d'air envoyées sous le couvercle de la cuve et évacuées en continu.

Après avoir fait fonctionner la pompe primaire 25 de la seconde boucle 23 jusqu'à obtenir une intensité stabilisée de son moteur d'entraînement, on arrête la pompe primaire 25 de la seconde boucle 23 et on met en fonctionnement la pompe primaire 15 de la première boucle 13 du circuit primaire, de manière à évacuer l'air résiduel contenu dans la première boucle 13 et dans les seconde et troisième boucles, vers la cuve du réacteur.

Après avoir fait fonctionner la pompe primaire 15 de la première boucle pendant un temps suffisant, on met en fonctionnement simultanément les trois pompes primaires 15, 25 et 35 et on continue à évacuer, pendant le fonctionnement des trois pompes, l'air résiduel par la conduite d'éventage de la cuve et par l'intermédiaire d'une ligne d'éventage de la cuve vers le pressuriseur 17.

Après l'arrêt des trois pompes 15, 25, 35 la totalité de l'air et des gaz contenus dans le circuit primaire est accumulée dans la partie haute du pressuriseur 17 et de la ligne d'aspersion 19. Le niveau de pression du circuit primaire est ramené à 3 bars par extraction d'eau. Ce niveau de pression atteint, par ouverture de la vanner 21 on procède à l'extraction du gaz et de l'émulsion au travers de la ligne d'aspersion 19 et de la ligne d'éventage 2 par ouverture de la vanne 21.

Il est à remarquer qu'entre les différentes phases de mise en fonctionnement successives des pompes primaires, on maintient la pression dans-le circuit primaire à 25 bars. Contrairement au procédé suivant l'art antérieur, on n'effectue donc pas de cycles de pression entre 25 et 3 bars entre les différentes phases de fonctionnement des pompes primaires. On réduit donc considérablement le temps d'intervention pour réaliser l'éventage du circuit primaire et les risques d'erreur lors des opérations successives effectuées sur le circuit primaire. En outre, on diminue considérablement les volumes d'effluents produits puisqu'on n'extrait pas d'eau du circuit primaire pour porter la pression de 25 bars à 3 bars, comme dans le cas du premier procédé suivant l'art antérieur décrit plus haut.

Le niveau de l'eau dans le circuit primaire reste suffisant pendant toutes les opérations pour assurer un fonctionnement parfait des circuits de refroidissement RRA et des capteurs de pressuriseur, du fait qu'il n'est pas nécessaire d'abaisser le niveau dans le circuit primaire jusqu'au niveau médian des boucles, comme dans le cas du second procédé selon l'art antérieur décrit plus haut.

Toutefois, entre deux étapes successives d'arrêt et de mise en fonctionnement de pompes primaires, il est nécessaire de prévoir une période d'arrêt de la circulation du fluide primaire d'une durée suffisante pour permettre la rupture des émulsions d'eau et d'air encore présentes dans le circuit primaire et l'évacuation en continu de l'air séparé de l'émulsion vers le pressuriseur

Après avoir réalisé l'éventage avec les trois pompes des trois boucles du circuit primaire en fonctionnement, pendant une durée suffisante, on arrête les trois pompes et on abaisse la pression dans le circuit primaire jusqu'à un niveau proche de 3 bars. On réalise un éventage final du circuit primaire, et on évacue le gaz accumulé en haut du pressuriseur au travers de la ligne d'aspersion et de la ligne d'éventage du pressuriseur par ouverture de la vanne d'évent.

Il est alors possible d'effectuer le redémarrage du réacteur nucléaire. Avant d'effectuer le redémarrage, on remonte la pression dans le circuit primaire à un niveau proche de 25 bars et l'on vérifie que la quantité résiduelle d'air dans le circuit primaire est inférieure à un seuil fixé permettant un redémarrage et un fonctionnement satisfaisants du réacteur nucléaire. Si la vérification est satisfaisante, on vidange le dispositif par sa ligne de vidange après ouverture et la vanne de vidange puis on démonte la liaison entre la ligne d'éventage de la cuve et la conduite de décharge du pressuriseur et on isole la conduite de décharge du pressuriseur puis on isole la ligne d'évent de la cuve.

Comme représenté sur la figure 3, selon une variante de réalisation, une pompe 50 intercalée sur la conduite 32 reliant la conduite d'éventage de la cuve à la conduite de décharge de pressuriseur permet d'activer la circulation de l'air provenant de la cuve, en direction du pressuriseur, comme représenté par la flèche 45.

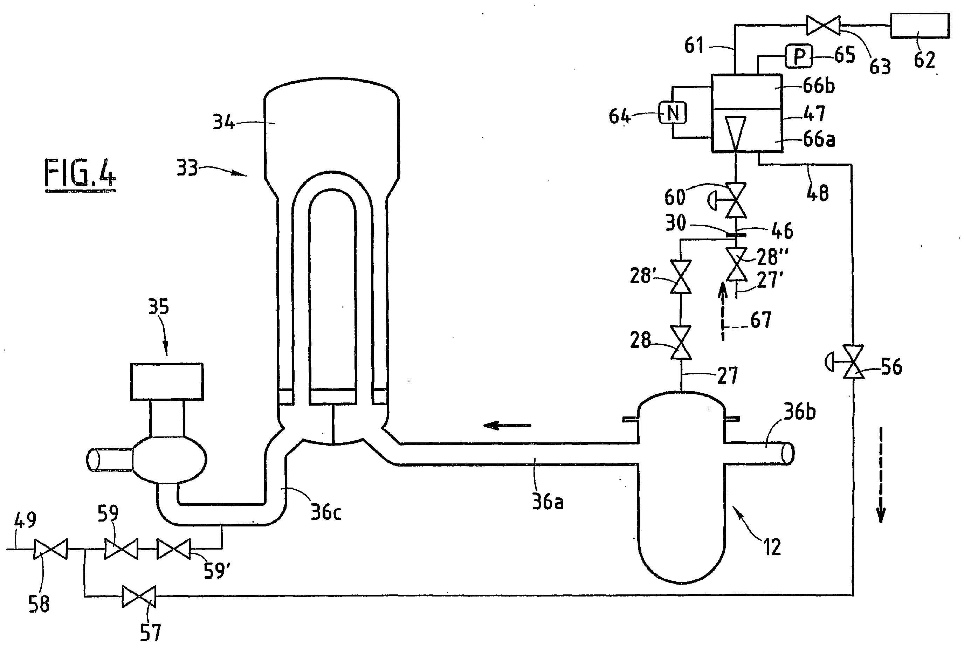

Comme représenté sur les figures 4, 5 et 6, l'éventage de la cuve peut être réalisé sous une forme différente de celle qui a été décrite plus haut.

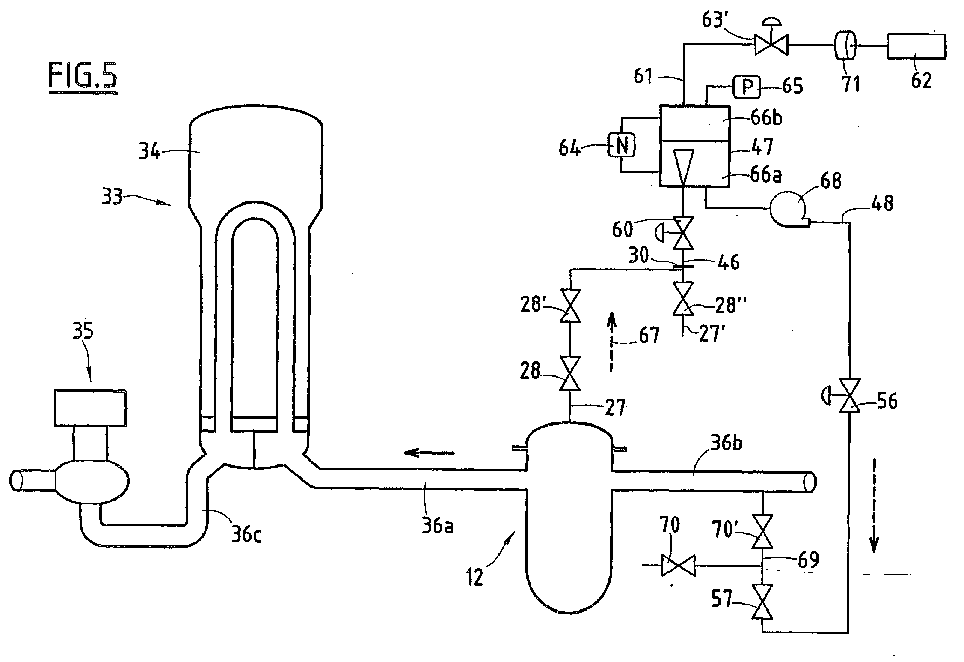

Les figures 4 et 5 représentent une boucle du circuit primaire du réacteur nucléaire dont la branche chaude 36a n'est pas reliée à la conduite d'expansion du pressuriseur. A titre d'exemple, on a représenté sur la figure 4, la troisième boucle 33 comportant le générateur de vapeur 34 et la pompe primaire 35 et les deux conduites primaires reliées à la cuve 12 du réacteur nucléaire, à savoir la branche chaude 36a et la branche froide 36b.

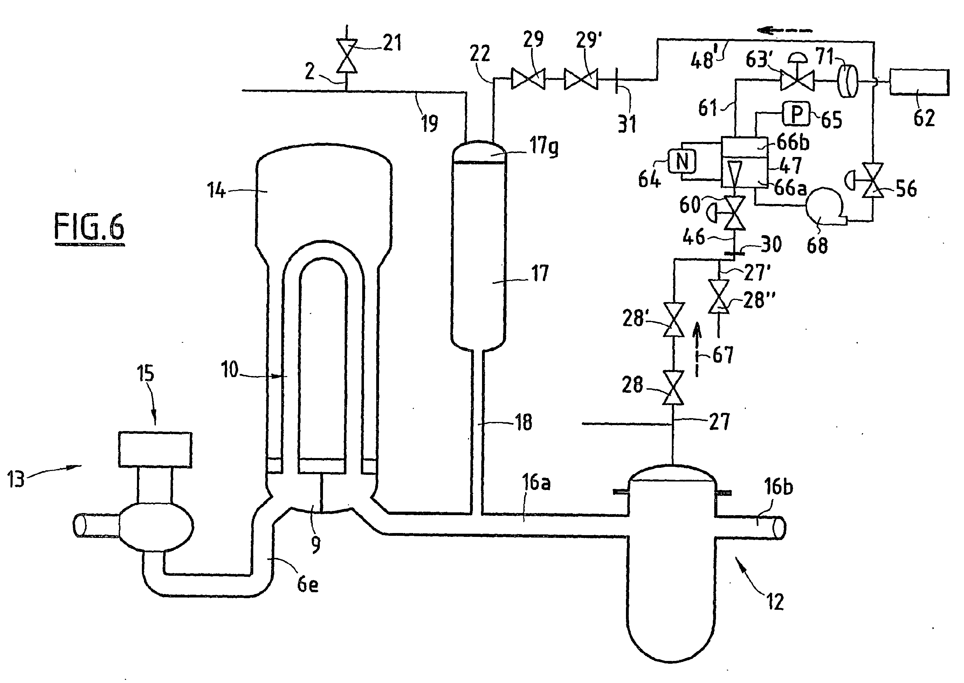

La figure 6 représente une boucle du circuit primaire du réacteur dont la branche chaude 16a est reliée à la conduite d'expansion 18 du pressuriseur. A titre d'exemple on a représenté sur la figure 6 la boucle 13 comportant le générateur de vapeur 14 et la pompe primaire 15 et les deux conduits primaires reliés à la cuve 12 du réacteur, à savoir la branche chaude 16a et la branche froide 16b.

De manière générale, les éléments correspondants représentés sur les figures 4, 5 et 6, d'une part, et sur les figures 2 et 3, d'autre part, sont affectés des mêmes repères.

Les modes de réalisation du dispositif et du procédé suivant l'invention illustrés par les figures 4, 5 et 6 diffèrent du mode de réalisation décrit ci-dessus par le fait que la conduite d'éventage 27 de la cuve 12 est reliée par l'intermédiaire d'une conduite de liaison 46 à la partie inférieure d'un réservoir 47 destiné à recevoir l'air ou l'émulsion provenant de la cuve, pendant le procédé d'éventage selon l'invention: De manière générale, le procédé d'éventage mis en oeuvre avec les dispositifs représentés sur les figures 4, 5 et 6 comporte les mêmes étapes successives que le procédé décrit ci-dessus. Le procédé mis en oeuvre par les dispositifs représentés sur les figures 4, 5 et 6 ne diffère du procédé décrit antérieurement que par les moyens d'évacuation de l'air parvenant sous le couvercle de la cuve 12.

Dans le cas du dispositif représenté sur la figure 4, la partie inférieure du réservoir 47 est également reliée par une canalisation 48, à une tuyauterie de vidange 49 de la branche intermédiaire 36c reliée à un point bas de la branche intermédiaire 36c en amont de la pompe primaire 35, c'est-à-dire du côté d'entrée ou d'aspiration de la pompe primaire. La pression au point de raccordement de la tuyauterie 49 est une basse pression pour l'ensemble du circuit primaire.

Sur la conduite 48 sont disposées une vanne motorisée 56 et une vanne d'isolation 57 permettant d'assurer la mise en communication de la partie inférieure du réservoir avec la tuyauterie 49. Sur la tuyauterie 49 sont également prévues, d'un côté de l'embranchement de la conduite 48, une vanne d'isolation 58 et, de l'autre côté du raccordement de la conduite 48, deux vannes d'isolation 59 et 59'.

Sur la conduite 46 de liaison de la conduite d'éventage 27 de la cuve au réservoir 47 est également prévue une vanne motorisée 60.

La partie supérieure du réservoir 47 est reliée à une ligne 61 d'évacuation d'effluents vers un réservoir 62 sur laquelle est disposée une vanne d'isolation 63.

Sur le réservoir 47 sont prévus des moyens de mesure tels qu'un capteur de niveau 64 et un capteur de pression 65. On peut ainsi surveiller en continu l'état des fluides dans le réservoir 47.

Lorsque les vannes 28 et 28' de la conduite d'éventage 27 de la cuve sont ouvertes, dans les phases décrites plus haut du procédé d'éventage, la vanne motorisée 60 étant également ouverte, de l'air et de l'eau sous forme d'émulsion parviennent dans le réservoir 47 par sa partie inférieure. L'émulsion se rompt à l'intérieur du récipient 47 si bien qu'il renferme, après un certain temps de fonctionnement, dans sa partie inférieure 66a, de l'eau séparée de l'air et, dans sa partie supérieure 66b, de l'air qui peut être évacué vers le réservoir d'effluents 62 par ouverture de la vanne 63 de la conduite d'évacuation 61. Lorsque les vannes 56 et 57 de liaison à la tuyauterie 49 et les vannes 59 et 59' de la tuyauterie 49 sont ouvertes, la basse pression dans la branche intermédiaire 36c assure la mise en circulation de l'eau contenue dans le réservoir vers la tuyauterie 49, de sorte que, par réaction, de l'air d'éventage est mis en circulation dans les conduites 27 et 46, comme représenté par la flèche en pointillés 67. On peut encore améliorer l'activation de la circulation de l'eau provenant du réservoir et donc de l'air dans la conduite d'éventage 27 de la cuve, en prévoyant une pompe de circulation 68 sur la conduite 48 reliée à la partie inférieure du réservoir 47 (voir figure 5).

Sur la figure 5, on a représenté une troisième variante du dispositif d'éventage suivant l'invention qui ne diffère de la seconde variante représentée sur la figure 4 que par certains aménagements permettant d'augmenter encore la rapidité du procédé d'éventage suivant l'invention.

La conduite 48 sur laquelle est disposée une pompe de circulation 68 en amont de la vanne motorisée 56 peut être reliée à une tuyauterie 69 de soutirage reliée à la branche froide 36b de la boucle du circuit primaire entre deux vannes d'isolation 70 et 70' placées sur la tuyauterie 69, la conduite 48 comportant une vanne 57 en amont de son raccordement à la tuyauterie 69.

Sur la conduite 61 d'éventage du réservoir 47 est prévue une vanne motorisée 63' se substituant à la vanne 63 du second mode de réalisation décrit précédemment et, entre la vanne motorisée 63' et le réservoir d'effluents 62, un dispositif de détente 71 comportant un orifice calibré, de manière à abaisser la pression du fluide provenant du réservoir 47.

Le dispositif représenté sur la figure 5 permet de mettre en oeuvre le procédé d'éventage suivant l'invention en réalisant l'évacuation de l'air et des effluents à une pression de 25 bars, ce qui permet de diminuer la taille du réservoir 47.

Sur la figure 6 on a représenté une quatrième variante du dispositif d'éventage qui ne diffère de la variante représentée en figure 5 que par certains aménagements permettant de ramener l'eau 66a du réservoir 47 au haut du pressuriseur au lieu de la réinjecter dans la branche froide 36b. Dans cette variante la tuyauterie 48' relie la partie basse du réservoir 47 à la tuyauterie 22 de décharge du pressuriseur 17. Les vannes 29 et 29' de la ligne de décharge 22 sont ouvertes durant toute l'opération d'éventage comme les vannes 70' et 57 dans le cas du mode de réalisation de la figure 5. Le pilotage de l'extraction d'air est aussi identique pour les variantes représentées sur les figures 5 et 6.

Toutefois, dans ce cas, il reste nécessaire d'effectuer un éventage final du circuit primaire à 3 bars.

Certaines précautions doivent être prises quant à la commande des vannes et de la pompe pour éviter toute incidence du procédé sur l'intégrité du circuit primaire. De ce fait, les vannes motorisées 60, 56 et 63' sont commandées automatiquement selon un programme permettant d'éviter toute erreur de manoeuvre ou pouvant provoquer une détérioration de la pompe.

En particulier, un ordre d'ouverture de la vanne 63' ne peut être transmis que si la vanne 56 est fermée. Les phases de recirculation d'eau du réservoir 47 et d'évacuation de l'air et des effluents contenus dans ce réservoir ne sont donc pas simultanées. En outre, les vannes motorisées 60, 63' et 56 reçoivent un ordre de fermeture d'urgence si la pression dans le réservoir 47 devient très différente de la pression dans le circuit primaire. On prévoit donc des seuils de déclenchement de la fermeture des vannes motorisées, en fonction de la différence de pression dans le réservoir 47 et dans le circuit primaire. La pompe 68 reçoit un ordre d'arrêt dès la fermeture des vannes 56 ou 60 et dès que le niveau dans le réservoir 47 mesuré par le capteur 64 atteint un niveau bas.

Les dispositifs d'évacuation d'air et d'effluents tels que représentés sur les figures 4 et 5 peuvent être associés à une seule boucle du circuit primaire telle que la seconde ou la troisième boucle ou encore à la fois aux seconde et troisième boucles ou même encore aux trois boucles du circuit primaire à trois boucles. Le dispositif d'évacuation d'air et d'effluents tel que représenté sur la figure 6 est une solution mixte entre le dispositif représenté en figure 3 et le dispositif représenté en figure 5 qui permet de ne réinjecter au pressuriseur que de l'eau déchargée de son émulsion.

Dans tous les cas, les avantages du procédé suivant l'invention qui ont été indiqués plus haut dans le cas du mode de réalisation selon les figures 2 et 3 sont également obtenus dans le cas des variantes selon les figures 4, 5 et 6, ces avantages pouvant être sensiblement supérieurs dans le cas des variantes de réalisation selon les figures 4, 5 et 6.

L'invention ne se limite pas au mode de réalisation qui a été décrit et qui est propre à un réacteur nucléaire ayant un circuit primaire à trois boucles.

Le procédé suivant l'invention s'applique à tout réacteur nucléaire et à toutes les installations à eau sous pression quel que soit le nombre de boucles et en particulier à des réacteurs nucléaires à quatre boucles.

Les moyens utilisés pour la mise en oeuvre du procédé suivant l'invention qui sont raccordés et vissés sur le circuit primaire du réacteur peuvent présenter des formes de réalisation différentes de celles qui ont été décrites.

## Revendications

1. Procédé d'éventage du circuit primaire (1) d'un réacteur nucléaire refroidi par de l'eau sous-pression, pour réaliser le remplissage complet en eau du circuit primaire (1) qui comporte une cuve (12) renfermant le coeur du réacteur de forme globalement cylindrique ayant un axe vertical et une extrémité supérieure fermée par un couvercle (12a) et au moins deux boucles (13, 23, 33) comportant chacune une première et une seconde canalisations primaires (16a, 26a, 36a, 16b, 26b, 36b) en communication avec la partie interne de la cuve (12), un générateur de vapeur (14, 24, 34) ayant une partie primaire comportant un faisceau de tubes (10) ayant des branches sensiblement verticales, reliée à la cuve (12) par la première canalisation (15a, 26a, 36a) et une pompe primaire (15, 25, 35) ayant une partie de refoulement reliée à la cuve (12) par la seconde canalisation primaire (16b, 26b, 36b) et une partie d'aspiration reliée à la partie primaire du générateur de vapeur (14, 24, 34) par une troisième canalisation primaire (16c, 26c, 36c), ainsi qu'un pressuriseur (17) relié à la première canalisation primaire (16a) de l'une des boucles (13) du circuit primaire (1), par une conduite de pressurisation (18), les points les plus hauts du circuit primaire (1) étant constitués, dans un ordre de niveau décroissant, par la partie supérieure du pressuriseur (17) comportant une première conduite d'éventage (2) placé sur une conduite d'aspersion (19) reliée au pressuriseur (17) par la partie supérieure des branches des faisceaux (10) des tubes des générateurs de vapeur (14, 24, 34) et par la partie supérieure de la cuve (12) fermée par un couvercle (12a) comportant une seconde conduite d'éventage (27), **caractérisé par le fait :**
- **qu'**on remplit le circuit primaire (1) d'eau et qu'on établit la pression de l'eau dans le circuit primaire (1) à un niveau permettant le fonctionnement des pompes primaires (15, 25, 35),
- **qu'**on met en fonctionnement une première pompe primaire (35) d'une boucle (33) non reliée au pressuriseur (17) par une conduite de pressurisation (18),
- **qu'**on évacue en continu des gaz contenus dans le circuit primaire (1) et entraînés par l'eau mise en circulation par la pompe primaire (35), à la partie supérieure (12a) de la cuve (12); au moins pendant le fonctionnement de la première pompe primaire (35),
- **qu'**on arrête la première pompe primaire (35),
- **qu'**on met en fonctionnement, successivement, chacune des pompes primaires (35, 25, 15) puis simultanément l'ensemble des pompes primaires (15, 25, 35) du circuit primaire (1) en réalisant simultanément l'évacuation en continu des gaz à la partie supérieure de la cuve (12), et
- **qu'**on effectue l'éventage final du circuit primaire aux points hauts du pressuriseur (17) et de la cuve (12) par l'intermédiaire de la première et de la seconde conduites d'éventage (27, 22, 19 et 2), après arrêt des pompes primaires et abaissement de la pression de l'eau dans le circuit primaire (12) à un niveau inférieur à la pression permettant le fonctionnement des pompes primaires (15, 25, 35).

2. Procédé suivant la revendication 1, **caractérisé par le fait qu'**on réalise l'évacuation des gaz à la partie supérieure de la cuve (12) par l'intermédiaire de la seconde conduite d'éventage (27) vers la partie supérieure du pressuriseur (17) dont l'éventage est réalisé par la première conduite d'éventage (2) par l'intermédiaire de la conduite d'aspersion (19).

3. Procédé suivant la revendication 1, **caractérisé par le fait qu'**on réalise l'évacuation des gaz à la partie supérieure de la cuve (12) dans un réservoir (47) ayant une partie inférieure reliée à la seconde conduite d'éventage (27).

4. Procédé suivant la revendication 3, **caractérisé par le fait qu'**on réalise l'éventage du réservoir (47) à un niveau de pression permettant le fonctionnement des pompes primaires (15, 25, 35) dans le circuit primaire.

5. Procédé suivant l'une quelconque des revendications 2, 3 et 4, **caractérisé par le fait qu'**on assure une circulation forcée de fluide dans la seconde conduite d'éventage (27) par l'intermédiaire d'une pompe (50, 68).

6. Procédé suivant l'une quelconque des revendications 1 à 5, dans le cas d'un circuit primaire d'un réacteur nucléaire comportant trois boucles (13, 23, 33), une première boucle (13) comportant une branche chaude (16a) reliée par une conduite de pressurisation (18) au pressuriseur (17) et une seconde (23) et une troisième boucles (33) ayant des branches chaudes respectives (26a, 36a) qui ne sont pas reliées au pressuriseur (17) par une conduite de pressurisation, **caractérisé par le fait que** la première pompe primaire (35, 25) mise en fonctionnement est l'une de la pompe primaire (35) de la troisième boucle (33) et de la pompe primaire (25) de la seconde boucle (23) du circuit primaire (1), qu'\après arrêt de la première pompe primaire (35, 25), on met en fonctionnement la pompe primaire (25, 35) de la seconde ou de la troisième boucle (23, 33), respectivement, puis, après arrêt de la pompe primaire de la seconde ou de la troisième boucle (23, 33), on met en fonctionnement la pompe primaire.de la première boucle (13) du circuit primaire (1), la circulation d'eau dans chaque boucle du circuit primaire dans laquelle une pompe est mise en fonctionnement étant effectuée dans le sens de circulation lors du fonctionnement du réacteur nucléaire et dans le sens inverse du sens de fonctionnement, dans chaque boucle du circuit primaire dans laquelle la pompe primaire n'est pas mise en fonctionnement.

7. Dispositif d'éventage du circuit primaire (1) d'un réacteur nucléaire refroidi par de l'eau sous pression, pour réaliser le remplissage complet en eau du circuit primaire (1) qui comporte une cuve (12) renfermant le coeur du réacteur de forme globalement cylindrique ayant un axe vertical et une extrémité supérieure fermée par un couvercle (12a) et au moins deux boucles (13, 23, 33) comportant chacune une première et une seconde canalisations primaires (16a, 26a, 36a, 16b, 26b, 36b) en communication avec la partie interne de la cuve (12), un générateur de vapeur (14, 24, 34) ayant une partie primaire comportant un faisceau de tubes (10) ayant des branches sensiblement verticales, reliée à la cuve (12) par la première canalisation (16a, 26a, 36a) et une pompe primaire (15, 25, 35) ayant une partie de refoulement reliée à la cuve (12) par la seconde canalisation primaire (16b, 26b, 36b) et une partie d'aspiration reliée à la partie primaire du générateur de vapeur (14, 24, 34) par une troisième canalisation primaire (16c, 26c, 36c), ainsi qu'un pressuriseur (17) relié à la première canalisation primaire (16a) de l'une des boucles (13) du circuit primaire (1), par une conduite de pressurisation (18), les points les plus hauts du circuit primaire (1) étant constitués, dans un ordre de niveau décroissant, par la partie supérieure du pressuriseur (17) comportant une première conduite d'éventage (2) placée sur une ligne d'aspersion (19) reliée au pressuriseur (17), par la partie supérieure des branches des faisceaux (10) des tubes des générateurs de vapeur (14, 24, 34) et par la partie supérieure de la cuve (12) fermée par un couvercle (12a) comportant une seconde conduite d'éventage (27), le dispositif d'éventage comportant des moyens (32, 47) reliés à la seconde conduite d'éventage (27) de la cuve (12) du réacteur nucléaire, pour évacuer en continu des gaz parvenant dans la partie supérieure de la cuve (12) du réacteur nucléaire, pendant le fonctionnement d'au moins une pompe primaire (15, 25, 35) du circuit primaire (1) du réacteur nucléaire,
**caractérisé par le fait que** les moyens d'évacuation en continu (32) des gaz parvenant dans la partie supérieure (12a) de la cuve (12) comportent une conduite (32) de liaison d'une extrémité (30) de la seconde conduite d'éventage (27) de la cuve (12) à une extrémité (31) d'une conduite de décharge (22) reliée à la partie supérieure du pressuriseur (17) qui est également reliée à la première conduite d'éventage (2) par une conduite d'aspersion (19).

8. Dispositif suivant la revendication 7, **caractérisé par le fait qu'**une pompe (50) est disposée sur la conduite de liaison (32).

9. Dispositif d'éventage du circuit primaire (1) d'un réacteur nucléaire refroidi par de l'eau sous pression, pour réaliser le remplissage complet en eau du circuit primaire (1) qui comporte un cuve (12) renfermant le coeur du réacteur de forme globalement cylindrique ayant un axe vertical et une extrémité supérieure fermée par un couvercle (12a) et au moins deux boucles (13, 23, 33) comportant chacune une première et une seconde canalisations primaires (16a, 26a, 36a, 16b, 26b, 36b) en communication avec la partie interne de la cuve (12), un générateur de vapeur (14, 24, 34) ayant une partie primaire comportant un faisceau de tubes (10) ayant des branches sensiblement verticales, reliée à la cuve (12) par la première canalisation (16a, 26a, 36a) et une pompe primaire (15, 25, 35) ayant une partie de refoulement reliée à la cuve (12) par la seconde canalisation primaire (16b, 26b, 36b) et une partie d'aspiration reliée à la partie primaire du générateur de vapeur (14, 24, 34) par une troisième canalisation primaire (16c, 26c, 36c), ainsi qu'un pressuriseur (17) relié à la première canalisation primaire (16a) de l'une des boucles (13) du circuit primaire (1), par une conduite de pressurisation (18), les points les plus hauts du circuit primaire (1) étant constitués, dans un ordre de niveau décroissant, par la partie supérieure du pressuriseur (17) comportant une première conduite d'éventage (2) placée sur la ligne d'aspersion (19) reliée un pressuriseur 17, par la partie supérieure des branches des faisceaux (10) des tubes des générateurs de vapeur (14, 24, 34) et par la partie supérieure de la cuve (12) fermée par un couvercle (12a) comportant une seconde conduite d'éventage (27), le dispositif d'éventage comportant des moyens (32, 47) reliés à la seconde conduite d'éventage (27) de la cuve (12) du réacteur nucléaire, pour évacuer en continu des gaz parvenant dans la partie supérieure de la cuve (12) du réacteur nucléaire, pendant le fonctionnement d'au moins une pompe primaire (15, 25, 35) du circuit primaire (1) du réacteur nucléaire,**caractérisé par le fait que** les moyens d'évacuation en continu de gaz parvenant dans la partie supérieure (12a) de la cuve (12) du réacteur nucléaire sont constitués par un réservoir (47) dont une partie inférieure est reliée par une conduite (46) à une extrémité (30) de la seconde conduite d'éventage (27) de la cuve (12) du réacteur et à des moyens (48, 68) d'activation de la circulation d'eau entraînée dans le réservoir (47) par les gaz parvenant dans la partie supérieure de la cuve (12) et dont une partie supérieure est reliée à un réservoir (62) d'évacuation d'effluents.

10. Dispositif suivant la revendication 19, **caractérisé par le fait que** les moyens (48) d'activation de la circulation d'eau depuis la partie inférieure du réservoir (47) sont constitués par une conduite (48) reliée à un point à basse pression d'au moins une boucle du circuit primaire sur laquelle est disposée au moins une vanne (56, 57).

11. Dispositif suivant la revendication 9, **caractérisé par le fait que** les moyens d'activation de la circulation d'eau depuis la partie inférieure du réservoir (47) sont constitués par une conduite (48) reliée à au moins l'une des branches d'une boucle du circuit primaire (1) du réacteur nucléaire sur laquelle sont disposées une pompe de circulation (68) et au moins une vanne d'arrêt (56, 57).

12. Dispositif suivant la revendication 11, **caractérisé par le fait qu'**une vanne motorisée (63') et un dispositif de détente (71) à orifice calibré sont disposés sur la conduite (61) d'évacuation d'effluents reliée à la partie supérieure du réservoir (47) et que des vannes motorisées (56, 60) sont disposées, respectivement, sur la conduite (48) de liaison de la partie inférieure du réservoir (47) au circuit primaire et sur la conduite de liaison (46) de la partie inférieure du réservoir (47) à l'extrémité (30) de la seconde conduite d'éventage (27) de la cuve (12).

13. Dispositif suivant la revendication 9, **caractérisé par le fait que** les moyens d'activation de la circulation d'eau dans la partie inférieure d'un réservoir (47) sont constitués par une conduite (48') de liaison entre la partie inférieure du réservoir (47) et une extrémité (31) de la conduite de décharge (32) du pressuriseur du réacteur nucléaire sur laquelle sont disposées une pompe (68) et au moins une vanne d'arrêt (29, 29' 56).

14. Dispositif suivant la revendication 13, **caractérisé par le fait qu'**au moins une première vanne motorisée (56) et au moins une seconde vanne motorisée (60) sont disposées respectivement sur la conduite (48') de liaison entre la partie inférieure du réservoir (47) et l'extrémité (31) de la conduite de décharge (22) du pressuriseur et sur la conduite (46) de liaison de la partie inférieure du réservoir (47) à l'extrémité (30) de la seconde conduite d'éventage (27) de la cuve (12).

## Claims

1. A method for venting the primary circuit (1) of a nuclear reactor cooled with pressurised water in order to completely fill with water the primary circuit (1) which comprises a vessel (12) enclosing the overall cylindrically-shaped reactor core which has a vertical axis and an upper end closed by a cover (12a) and at least two loops (13, 23, 33) each comprising a first and a second primary pipe (16a, 26a, 36a, 16b, 26b, 36b) in communication with the inner part of the vessel (12), a steam generator (14, 24, 34) having a primary part comprising a bundle of tubes (10) having substantially vertical branches, connected to the vessel (12) by the first pipe (16a, 26a, 36a), and a primary pump (15, 25, 35) having a discharge part connected to the vessel (12) by the second primary pipe (16b, 26b, 36b) and a suction part connected to the primary part of the steam generator (14, 24, 34) by a third primary pipe (16c, 26c, 36c) as well as a pressuriser (17) connected to the first primary pipe (16a) of one of the loops (13) of the primary circuit (1) by a pressurisation line (18), the uppermost points of the primary circuit (1) being formed, in decreasing order of height, by the upper part of the pressuriser (17) comprising a first venting line (2) placed on a suction line (19) connected to the pressuriser (17) by the upper part of the branches of the bundles (10) of the tubes of the steam generators (14, 24, 34) and by the upper part of the vessel (12) closed by a cover (12a) comprising a second venting line (27), **characterised by** the fact:
- that the primary circuit (1) is filled with water and that the water pressure in the primary circuit (1) is set at a level enabling operation of the primary pumps (15, 25, 35),
- that a first primary pump (35) of a loop (33) not connected to the pressuriser (17) by a pressurisation line (18) is set in operation,
- one continuously evacuates gases contained in the primary circuit (1) and carried by the water placed in circulation by the primary pump (35) to the upper part (12a) of the vessel (12), at least during operation of the first primary pump (35),
- the first primary pump (35) is stopped,
- each of the primary pumps (35, 25, 15), and then simultaneously all of the primary pumps (15, 25, 35) of the primary circuit (1) are placed in operation by simultaneously continuously evacuating the gases at the upper part of the vessel (12), and
- the final venting of the primary circuit is implemented at the uppermost points of the pressuriser (17) and of the vessel (12) by means of the first and of the second venting lines (27, 22, 19 and 2) after stopping the primary pumps and lowering the water pressure in the primary circuit (1) to a level lower than the pressure enabling operation of the primary pumps (15, 25, 35).

2. The method according to Claim 1, **characterised by** the fact that the gases are evacuated at the upper part of the vessel (12) by means of the second venting line (27) towards the upper part of the pressuriser (17) the venting of which is implemented by the first venting line (2) by means of the suction line (19).

3. The method according to Claim 1, **characterised by** the fact that the gases are evacuated at the upper part of the vessel (12) into a reservoir (47) having a lower part connected to the second venting line (27).

4. The method according to Claim 3, **characterised by** the fact that the venting of the reservoir (47) is implemented at a pressure level enabling operation of the primary pumps (15, 25, 35) in the primary circuit.

5. The method according to any of Claims 2, 3 and 4, **characterised by** the fact that one provides forced fluid circulation in the second venting line (27) by means of a pump (50, 68).

6. The method according to any of Claims 1 to 5, in the event of a primary circuit of a nuclear reactor comprising three loops (13, 23, 33), a first loop (13) comprising a hot branch (16a) connected by a pressurisation line (18) to the pressuriser (17) and a second (23) and a third loop (33) having respective hot branches (26a, 36a) which are not connected to the pressuriser (17) by a pressurisation line, **characterised by** the fact that the first primary pump (35, 25) placed in operation is one of the primary pump (35) of the third loop (33) and of the primary pump (25) of the second loop (23) of the primary circuit (1) which after stopping the first primary pump (35, 25) one places in operation the primary pump (25, 35) of the second or of the third loop (23, 33) respectively, then after stopping the primary pump of the second or of the third loop (23, 33) one places in operation the primary pump of the first loop (13) of the primary circuit (1), the circulation of water in each loop of the primary circuit in which a pump is placed in operation being implemented in the direction of circulation when the nuclear reactor is in operation and in the direction opposite the direction of operation in each loop of the primary circuit in which the primary pump is not placed in operation.

7. A device for venting the primary circuit (1) of a nuclear reactor cooled by pressurised water in order to completely fill with water the primary circuit (1) which comprises a vessel (12) enclosing the overall cylindrically-shaped reactor core which has a vertical axis and an upper end closed by a cover (12a) and at least two loops (13, 23, 33) each comprising a first and a second primary pipe (16a, 26a, 36a, 16b, 26b, 36b) in communication with the inner part of the vessel (12), a steam generator (14, 24, 34) having a primary part comprising a bundle of tubes (10) having substantially vertical branches, connected to the vessel (12) by the first pipe (16a, 26a, 36a), and a primary pump (15, 25, 35) having a discharge part connected to the vessel (12) by the second primary pipe (16b, 26b, 36b) and a suction part connected to the primary part of the steam generator (14, 24, 34) by a third primary pipe (16c, 26c, 36c) as well as a pressuriser (17) connected to the first primary pipe (16a) of one of the loops (13) of the primary circuit (1) by a pressurisation line (18), the uppermost points of the primary circuit (1) being formed, in decreasing order of height, by the upper part of the pressuriser (17) comprising a first venting line (2) placed on a suction line (19) connected to the pressuriser (17) by the upper part of the branches of the bundles (10) of the tubes of the steam generators (14, 24, 34) and by the upper part of the vessel (12) closed by a cover (12a) comprising a second venting line (27), the device further comprising means (32, 47) connected to the second venting line (27) of the vessel (12) of the nuclear reactor in order to continuously evacuate gases reaching the upper part of the vessel (12) of the nuclear reactor during operation of at least one primary pump (15, 25, 35) of the primary circuit (1) of the nuclear reactor, **characterised by** the fact that the means (32) for continuously evacuating gases reaching the upper part (12a) of the vessel (12) comprise a line (32) for connecting one end (30) of the second venting line (27) of the vessel (12) to one end (31) of a discharge line (22) connected to the upper part of the pressuriser (17) which is also connected to the first venting line (2) by a suction line (19).

8. The device according to Claim 7, **characterised by** the fact that a pump (50) is disposed on the connection line (32).

9. A device for venting the primary circuit (1) of a nuclear reactor cooled by pressurised water in order to completely fill with water the primary circuit (1) which comprises a vessel (12) enclosing the overall cylindrically-shaped reactor core which has a vertical axis and an upper end closed by a cover (12a) and at least two loops (13, 23, 33) each comprising a first and a second primary pipe (16a, 26a, 36a, 16b, 26b, 36b) in communication with the inner part of the vessel (12), a steam generator (14, 24, 34) having a primary part comprising a bundle of tubes (10) having substantially vertical branches, connected to the vessel (12) by the first pipe (16a, 26a, 36a), and a primary pump (15, 25, 35) having a discharge part connected to the vessel (12) by the second primary pipe (16b, 26b, 36b) and a suction part connected to the primary part of the steam generator (14, 24, 34) by a third primary pipe (16c, 26c, 36c) as well as a pressuriser (17) connected to the first primary pipe (16a) of one of the loops (13) of the primary circuit (1) by a pressurisation line (18), the uppermost points of the primary circuit (1) being formed, in decreasing order of height, by the upper part of the pressuriser (17) comprising a first venting line (2) placed on the suction line (19) connected to a pressuriser (17) by the upper part of the branches of the bundles (10) of the tubes of the steam generators (14, 24, 34) and by the upper part of the vessel (12) closed by a cover (12a) comprising a second venting line (27), the venting device comprising means (32, 47) connected to the second venting line (27) of the vessel (12) of the nuclear reactor in order to continuously evacuate gases reaching the upper part of the vessel (12) of the nuclear reactor during operation of at least one primary pump (15, 25, 35) of the primary circuit (1) of the nuclear reactor, **characterised by** the fact that the means for continuously evacuating gases reaching the upper part (12a) of the vessel (12) of the nuclear reactor are formed by a reservoir (47) a lower part of which is connected by a line (46) to one end (30) of the second venting line (27) of the vessel (12) of the reactor and to means (48, 68) for activating the circulation of water carried into the reservoir (47) by the gases reaching the upper part of the vessel (12) and an upper part of which is connected to a reservoir (62) for the evacuation of effluents.

10. The device according to Claim 9, **characterised by** the fact that the means (48) for activating the circulation of water from the lower part of the reservoir (47) are formed by a line (48) connected to a low pressure point of at least one loop of the primary circuit on which is disposed at least one valve (56, 57).

11. The device according to Claim 9, **characterised by** the fact that the means for activating the circulation of water from the lower part of the reservoir (47) are formed by a line (48) connected to at least one of the branches of a loop of the primary circuit (1) of the nuclear reactor on which are disposed a circulation pump (68) and least one stop valve (56, 57).

12. The device according to Claim 11, **characterised by** the fact that a motorised valve (63') and a calibrated orifice release device (71) are disposed on the effluent evacuation line (61) connected to the upper part of the reservoir (47) and that motorised valves (56, 60) are disposed respectively on the line (48) for connecting the lower part of the reservoir (47) to the primary circuit and on the line (46) for connecting the lower part of the reservoir (47) to the end (30) of the second venting line (27) of the vessel (12).

13. The device according to Claim 9, **characterised by** the fact that the means for activating the circulation of water in the lower part of a reservoir (47) are formed by a connection line (48') between the lower part of the reservoir (47) and one end (31) of the discharge line (32) of the pressuriser of the nuclear reactor on which are disposed a pump (68) and at least one stop valve (29, 29', 56).

14. The device according to Claim 13, **characterised by** the fact that at least one first motorised valve (56) and at least one second motorised valve (60) are disposed respectively on the connection line (48') between the lower part of the reservoir (47) and the end (31) of the discharge line (22) of the pressuriser and on the connection line (46) of the lower part of the reservoir (47) on the end (30) of the second venting line (27) of the vessel (12).

## Patentansprüche

1. Verfahren zum Entlüften des Primärkreises (1) eines mit Druckwasser gekühlten Kernreaktors, um eine vollständige Befüllung mit Wasser des Primärkreises (1) zu verwirklichen, der umfasst: einen den Reaktorkern umschließenden Tank (12) mit im Allgemeinen zylindrischer Form, der eine vertikale Achse und ein durch einen Deckel (12a) verschlossenes oberes Ende besitzt, wenigstens zwei Schleifen (13, 23, 33), wovon jede eine erste und eine zweite Primärleitung (16a, 26a, 36a, 16b, 26b, 36b) aufweist, die mit dem inneren Teil des Tanks (12) kommunizieren, einen Dampfgenerator (14, 24, 34), der einen Primärteil besitzt, der ein Rohrbündel (10) aufweist, das im Wesentlichen vertikale Zweige besitzt, die mit dem Tank (12) durch die erste Leitung (16a, 26a, 36a) verbunden sind, eine Primärpumpe (15, 25, 35), die einen durch die zweite Primärleitung (16b, 26b, 36b) mit dem Tank (12) verbundenen Förderabschnitt und einen durch eine dritte Primärleitung (16c, 26c, 36c) mit dem Primärteil des Dampfgenerators (14, 24, 34) verbundenen Saugabschnitt besitzt, und eine Druckbeaufschlagungsvorrichtung (17), die mit der ersten Primärleitung (16a) einer der Schleifen (13) des Primärkreises (1) durch eine Druckbeaufschlagungsleitung (18) verbunden ist, wobei die höchsten Punkte des Primärkreises (1) in der Reihenfolge abnehmender Höhe durch den oberen Teil der Druckbeaufschlagungseinrichtung (17), der eine erste Entlüftungsleitung (2) aufweist, die in einer mit der Druckbeaufschlagungseinrichtung (17) verbundenen Saugleitung (19) angeordnet ist, durch den oberen Teil der Zweige der Rohrbündel (10) der Dampfgeneratoren (14, 24, 34) sowie durch den oberen Teil des durch einen Deckel (12a) verschlossenen Tanks (12), der eine zweite Entlüftungsleitung (27) aufweist, gebildet sind, **dadurch gekennzeichnet, dass:**
- der Primärkreis (1) mit Wasser gefüllt wird und der Wasserdruck im Primärkreis (1) auf einen Pegel eingestellt wird, der den Betrieb der Primärpumpen (15, 25, 35) zulässt,
- dass eine erste Primärpumpe (35) einer Schleife (33), die nicht über eine Druckbeaufschlagungsleitung (18) mit der Druckbeaufschlagungseinrichtung (17) verbunden ist, in Betrieb versetzt wird,
- dass Gase, die in dem Primärkreis (1) enthalten sind und durch das durch die Primärpumpe (35) umgewälzte Wasser mitgenommen werden, im oberen Teil (12a) des Tanks (12) wenigstens während des Betriebs der ersten Primärpumpe (35) ununterbrochen abgeführt werden,
- dass die erste Primärpumpe (35) angehalten wird,
- dass nacheinander jede der Primärpumpen (35, 25, 15) und dann gleichzeitig alle Primärpumpen (15, 25, 35) des Primärkreises (1) in Betrieb versetzt werden, indem gleichzeitig die ununterbrochene Abführung der Gase im oberen Teil der Tank (12) ausgeführt wird, und
- dass die endgültige Entlüftung des Primärkreises an den oberen Punkten der Druckbeaufschlagungseinrichtung (17) und des Tanks (12) durch die erste und die zweite Entlüftungsleitung (27, 22, 19) nach dem Anhalten der Primärpumpen und dem Absenken des Wasserdrucks in dem Primärkreis (12) auf einen Pegel unterhalb des Drucks, der den Betrieb der Primärpumpen (15, 25, 35) zulässt, ausgeführt wird.

2. Verfahren nach Anspruch 1, **dadurch gekennzeichnet, dass** das Abführen der Gase im oberen Teil des Tanks (12) über die zweite Entlüftungsleitung (27) zum oberen Teil der Druckbeaufschlagungseinrichtung (17) ausgeführt wird, deren Entlüftung durch die erste Entlüftungsleitung (2) über die Saugleitung (19) ausgeführt wird.

3. Verfahren nach Anspruch 1, **dadurch gekennzeichnet, dass** das Abführen der Gase im oberen Teil des Tanks (12) in einen Behälter (47) erfolgt, der einen unteren Teil besitzt, der mit der zweiten Entlüftungsleitung (27) verbunden ist.

4. Verfahren nach Anspruch 3, **dadurch gekennzeichnet, dass** das Entlüften des Behälters (47) auf einen Druckpegel erfolgt, der den Betrieb der Primärpumpen (15, 25, 35) im Primärkreis zulässt.

5. Verfahren nach einem der Ansprüche 2, 3 und 4, **dadurch gekennzeichnet, dass** eine Zwangsumwälzung von Fluid in der zweiten Entlüftungsleitung (27) über eine Pumpe (50, 68) sichergestellt ist.

6. Verfahren nach einem der Ansprüche 1 bis 5 in dem Fall eines Kernreaktor-Primärkreises, der drei Schleifen (13, 23, 33) umfasst, wobei eine erste Schleife (13) einen ersten heißen Zweig (16a) aufweist, der über eine Druckbeaufschlagungsleitung (18) mit der Druckbeaufschlagungseinrichtung (17) verbunden ist, und wobei eine zweite Schleife (23) und eine dritte Schleife (33) jeweilige heiße Zweige (26a, 36a) besitzen, die nicht über eine Druckbeaufschlagungsleitung mit der Druckbeaufschlagungseinrichtung (17) verbunden sind, **dadurch gekennzeichnet, dass** die erste Primärpumpe (35, 25), die in Betrieb versetzt wird, entweder die Primärpumpe (35) der dritten Schleife (33) oder die Primärpumpe (25) der zweiten Schleife (23) des Primärkreises (1) ist und dass nach dem Anhalten der ersten Primärpumpe (35, 25) die Primärpumpe (25, 35) der zweiten bzw. der dritten Schleife (23, 33) in Betrieb versetzt wird und dann nach dem Anhalten der Primärpumpe der zweiten oder der dritten Schleife (23, 33) die Primärpumpe der ersten Schleife (13) des Primärkreises (1) in Betrieb versetzt wird, wobei die Umwälzung von Wasser in jeder Schleife des Primärkreises, in der eine Pumpe in Betrieb ist, während des Betriebs des Kernreaktors in Umwälzrichtung erfolgt und in jeder Schleife des Primärkreises, in der die Primärpumpe nicht in Betrieb ist, in der zur Betriebsrichtung entgegengesetzten Richtung erfolgt.

7. Entlüftungsvorrichtung für den Primärkreis (1) eines durch Druckwasser gekühlten Kernreaktors, um die vollständige Befüllung mit Wasser des Primärkreises (1) vorzunehmen, der umfasst: einen Tank (12) mit im Allgemeinen zylindrischer Form, der den Kern des Reaktors umschließt und eine vertikale Achse sowie ein durch einen Deckel (12a) verschlossenes oberes Ende besitzt, wenigstens zwei Schleifen (13, 23, 33), die jeweils eine erste und eine zweite Primärleitung (16a, 26a, 36a, 16b, 26b, 36b) aufweisen, die mit dem inneren Teil des Tanks (12) kommunizieren, einen Dampfgenerator (14, 24, 34), der einen Primärteil, der ein Rohrbündel (10) aufweist, das im Wesentlichen vertikale Zweige besitzt und durch die erste Leitung (16a, 26a, 36a) mit dem Tank (12)verbunden ist, eine Primärpumpe (15, 25, 35), die einen durch die zweite Primärleitung (16b, 26b, 36b) mit dem Tank (12) verbundenen Förderabschnitt und einen durch eine dritte Primärleitung (16c, 26c, 36c) mit dem Primärteil des Dampfgenerators (14, 24, 34) verbundenen Saugabschnitt besitzt, und eine Druckbeaufschlagungseinrichtung (17), die durch eine Druckbeaufschlagungsleitung (18) mit der ersten Primärleitung (16a) einer der Schleifen (13) des Primärkreises (1) verbunden ist, wobei die höchsten Punkte des Primärkreises (1) in der Reihenfolge abnehmender Höhe durch den oberen Teil der Druckbeaufschlagungseinrichtung (17), der eine erste Entlüftungsleitung (2) aufweist, die in einer mit der Druckbeaufschlagungseinrichtung (17) verbundenen Saugleitung angeordnet ist, durch den oberen Teil der Zweige der Rohrbündel (10) der Dampfgeneratoren (14, 24, 34) sowie durch den oberen Teil des durch einen Deckel (12a) verschlossenen Tanks (12), der eine zweite Entlüftungsleitung (27) aufweist, gebildet sind, wobei die Vorrichtung außerdem Mittel (32, 47) umfasst, die mit der zweiten Entlüftungsleitung (27) des Tanks (12) des Kernreaktors verbunden sind, um Gase, die im oberen Teil des Tanks (12) des Kernreaktors ankommen, während des Betriebs wenigstens einer Primärpumpe (15, 25, 35) des Primärkreises (1) des Kernreaktors ununterbrochen abzuführen,
**dadurch gekennzeichnet, dass** die Mittel (32) zum ununterbrochenen Abführen von Gasen, die im oberen Teil (12a) des Tank (12) ankommen, eine Leitung (32) enthalten, um ein Ende (30) der zweiten Entlüftungsleitung (27) des Tanks (12) mit einem Ende (31) einer Abführungsleitung (22) zu verbinden, die mit dem oberen Teil der Druckbeaufschlagungseinrichtung (17) verbunden ist, der außerdem mit der ersten Entlüftungsleitung (2) über eine Saugleitung (19) verbunden ist.

8. Vorrichtung nach Anspruch 7, **dadurch gekennzeichnet, dass** in der Verbindungsleitung (32) eine Pumpe (50) angeordnet ist.

9. Entlüftungsvorrichtung für den Primärkreis (1) eines durch Druckwasser gekühlten Kernreaktors, um die vollständige Befüllung mit Wasser des Primärkreises (1) vorzunehmen, der umfasst: einen Tank (12), der eine im Allgemeinen zylindrische Form hat und den Kern des Reaktors umschließt und eine vertikale Achse und ein durch einen Deckel (12a) verschlossenes oberes Ende besitzt, wenigstens zwei Schleifen (13, 23, 33), wovon jede eine erste und eine zweite Primärleitung (16a, 26a, 36a, 16b, 26b, 36b) besitzt, die mit dem inneren Teil der Tank (12) kommunizieren, einen Dampfgenerator (14, 24, 34), der einen Primärabschnitt besitzt, der ein Rohrbündel (10) aufweist, das im Wesentlichen vertikale Zweige besitzt und mit dem Tank (12) durch die erste Leitung (16a, 26a, 36a) verbunden ist, eine Primärpumpe (15, 25, 35), die einen durch die zweite Primärleitung (16b, 26b, 36b) mit dem Tank (12) verbundenen Förderabschnitt und einen durch eine dritte Primärleitung (16c, 26c, 36c) mit dem Primärteil des Dampfgenerators (14, 24, 34) verbundenen Saugabschnitt besitzt, und eine Druckbeaufschlagungseinrichtung (17), die durch eine Druckbeaufschlagungsleitung (18) mit der ersten Primärleitung (16a) einer der Schleifen (13) des Primärkreises (1) verbunden ist, wobei die höchsten Punkte des Primärkreises (1) in der Reihenfolge abnehmender Höhe durch den oberen Teil der Druckbeaufschlagungseinrichtung (17), der eine erste Entlüftungsleitung (2) aufweist, die in der mit einer Druckbeaufschlagungseinrichtung (17) verbundenen Saugleitung (19) angeordnet ist, durch den oberen Teil der Zweige der Rohrbündel (10) der Dampfgeneratoren (14, 24, 34) sowie durch den oberen Teil des durch einen Deckel (12a) verschlossenen Tanks (12), der eine zweite Entlüftungsleitung (27) besitzt, gebildet sind, wobei die Entlüftungsvorrichtung Mittel (32, 47) umfasst, die mit der zweiten Entlüftungsleitung (27) des Tanks (12) des Kernreaktors verbunden sind, um Gase, die im oberen Teil des Tanks (12) des Kernreaktors ankommen, während des Betriebs wenigstens einer Primärpumpe (15, 25, 35) des Primärkreises (1) des Kernreaktors ununterbrochen abzuführen, **dadurch gekennzeichnet, dass** die Mittel zum ununterbrochenen Abführen von Gasen, die im oberen Teil (12a) des Tanks (12) des Kernreaktors ankommen, durch einen Behälter (47) gebildet sind, wovon ein unterer Teil durch eine Leitung (46) mit einem Ende (30) der zweiten Entlüftungsleitung (27) des Tanks (12) des Reaktors und mit Mitteln (48, 68) zum Aktivieren der Umwälzung von Wasser, das im Behälter (47) durch die im oberen Teil der Tank (12) ankommenden Gase angetrieben wird, verbunden ist und wovon ein oberer Teil mit einem Behälter (62) zum Abführen von Ausflüssen verbunden ist.

10. Vorrichtung nach Anspruch 9, **dadurch gekennzeichnet, dass** die Mittel (48) zum Aktivieren der Wasserumwälzung vom unteren Teil des Behälters (47) durch eine Leitung (48) gebildet sind, die mit einem Punkt auf niedrigem Druck wenigstens einer Schleife des Primärkreises verbunden sind, in der wenigstens ein Schieber (56, 57) angeordnet ist.

11. Vorrichtung nach Anspruch 9, **dadurch gekennzeichnet, dass** die Mittel zum Aktivieren der Wasserumwälzung vom unteren Teil des Behälters (47) durch eine Leitung (48) gebildet sind, die mit wenigstens einem der Zweige einer Schleife des Primärkreises (1) des Kernreaktors verbunden ist und in der eine Umwälzpumpe (68) und wenigstens ein Absperrschieber (56, 57) angeordnet sind.

12. Vorrichtung nach Anspruch 11, **dadurch gekennzeichnet, dass** in der Leitung (61) zum Abführen von Ausflüssen, die mit dem oberen Teil des Behälters (47) verbunden ist, ein motorbetriebener Schieber (63') und eine Entlastungsvorrichtung (71) mit kalibrierter Öffnung angeordnet sind und dass die motorbetriebenen Schieber (56, 60) in der Verbindungsleitung (48) des unteren Teils des Behälters (47) mit dem Primärkreis bzw. in der Verbindungsleitung (46) des unteren Teils des Behälters (47) mit dem Ende (30) der zweiten Entlüftungsleitung (27) des Tanks (12) angeordnet sind.

13. Vorrichtung nach Anspruch 9, **dadurch gekennzeichnet, dass** die Mittel zum Aktivieren der Wasserumwälzung im unteren Teil eines Behälters (47) durch eine Verbindungsleitung (48') zwischen dem unteren Teil des Behälters (47) und einem Ende (31) der Abführungsleitung (32) der Druckbeaufschlagungseinrichtung des Kernreaktors, in der eine Pumpe (68) und wenigstens ein Absperrschieber (29, 29', 56) angeordnet sind, gebildet sind.

14. Vorrichtung nach Anspruch 13, **dadurch gekennzeichnet, dass** wenigstens ein erster motorbetriebener Schieber (56) und wenigstens ein zweiter motorbetriebener Schieber (60) in der Verbindungsleitung (48') zwischen dem unteren Teil des Behälters (47) und dem Ende (31) der Abführungsleitung (22) der Druckbeaufschlagungseinrichtung bzw. in der Verbindungsleitung (46) des unteren Teils des Behälters (47) mit dem Ende (30) der zweiten Entlüftungsleitung (27) des Tanks (12) angeordnet sind.
